# EUROPÄISCHE PATENTANMELDUNG

(11) **EP 2 503 112 A1**
(43) Veröffentlichungstag der Anmeldung: **26.09.2012**
(21) Anmeldenummer: 11159511.2
(22) Anmeldetag: 24.03.2011
(51) Int. Cl.: F01K 3/24, F01K 13/00, F01K 13/02, F01K 23/10

(54) **Verfahren zum schnellen Zuschalten eines Dampferzeugers**

(71) Anmelder: Siemens Aktiengesellschaft, 80333 München (DE)
(72) Erfinder: Migl, Matthias, 80997, München (DE); Schmid, Erich, 91080, Marloffstein (DE); Peters, Georg, 66564, Ottweiler (DE); Hermsdorf, Christian, 91094, Langensendelbach (DE); Schöttler, Michael, 91052, Erlangen (DE)

(57) **Zusammenfassung**

Die Erfindung betrifft ein Verfahren zum Zuschalten zumindest eines weiteren Dampferzeugers (13) zu einem ersten Dampferzeuger in einer Kraftwerksanlage , die wenigstens zwei Dampferzeuger (13) und eine Dampfturbine (14) umfasst, bei dem ein zum Antrieb der Dampfturbine (14) verwendetes Fluid in einem eine Anzahl von Dampfsystemen (27,31,36) umfassenden Fluidkreislauf geführt wird, wobei die Dampfsysteme (27,31,36) einzelnen Dampferzeugern (13) zugeordnet sind und mit Absperrarmaturen (42,43,44,45,46,47,50,51,52) gegeneinander separierbar sind und bei dem das Fluid mindestens des ersten Dampferzeugers auf die Dampfturbine (14) geschaltet ist, wobei, bevor der Dampf des zumindest einen weiteren Dampferzeugers (13) annähernd gleiche Dampfparameter wie der Dampf des ersten Dampferzeugers erreicht hat, die Absperrarmatur (45) mindestens eines ersten Dampfsystems des zumindest einen weiteren Dampferzeugers (13) geöffnet wird, so dass Dampf in den weiteren Dampferzeuger strömen kann.

## Beschreibung

Die Erfindung betrifft ein Verfahren zum schnellen Zuschalten zumindest eines weiteren Dampferzeugers zu einem ersten Dampferzeuger in einer Kraftwerksanlage. Die Erfindung betrifft ferner die Verwendung des Verfahrens in einer Gas- und Dampfturbinenanlage und in einem Dampfkraftwerk.

Bei einer Kraftwerks-Anlage, bei der zwei oder mehr Dampferzeuger auf eine Dampfturbine geschaltet sind, müssen bei einem Beifahren oder Zuschalten eines zweiten oder dritten Dampferzeugers die Dampfsysteme auf etwa gleiche Dampfzustände (Druck, Temperatur) gebracht werden, um die Systeme durch Öffnen der Absperrarmaturen verbinden zu können.

Dazu wird eine bestimmte Zeit benötigt und meistens muss dabei auch die Dampferzeuger-Leistung konstant gehalten werden, damit bei der Kopplung möglichst stationäre und stabile Zustände vorliegen. Ist dies nicht der Fall, kann es durch Druck-, Temperatur- oder Dampfmengenänderungen zu Störungen innerhalb der Dampferzeuger-Systeme (Trommelniveauänderungen) oder des Dampfturbinen-Betriebes kommen (Ansprechen von Grenzwerten, Dampfturbinen-Trip). Dadurch wird für dieses Zufahren eine bestimmte Zeit benötigt und die Kraftwerksleistung kann nicht so schnell wie gewünscht gesteigert werden. Außerdem wird während des Zufahrens der erzeugte Dampf über die Umleitstationen in den Kondensator verworfen und dadurch der Anlagenwirkungsgrad vermindert.

Bekannt ist ein Verfahren, bei dem die Dampfsysteme nach einer bestimmten logischen Reihenfolge auf annähernd gleichen Druck und Temperatur gebracht und die Systeme in einer bestimmten Reihenfolge gekoppelt werden. Beispielsweise wird bei Dreidruckanlagen mit einfacher Zwischenüberhitzung zunächst das kalte Zwischenüberhitzungs-System auf gleiche Dampfparameter eingestellt und durch Öffnen des kalten Zwischenüberhitzungs-Schiebers an das mit der Dampfturbine in Betrieb befindliche Zwischenüberhitzungs-System gekoppelt. Danach wird das Hochdruck-Dampfsystem des zweiten Dampferzeugers in gleicher Weise mit dem in Betrieb befindlichen ersten Dampferzeuger verbunden. Daraufhin wird bei Druck- und Temperaturgleichheit auch das heiße Zwischenüberhitzungs-System gekoppelt, indem der Dampfschieber im heißen Zwischenüberhitzungs-System geöffnet wird. Die Umleitstationen werden dabei jeweils geregelt geschlossen und damit die Dampfturbine stärker belastet. In gleicher Weise wird nach diesen Schritten auch das Niederdruck-Dampfsystem mit dem des zweiten Dampferzeugers verbunden. Nachteilig hieran ist, dass dieses Verfahren sehr zeitaufwändig ist.

Alternativ hierzu können nach dem Harmonisieren der verschiedenen Druck- und Temperaturniveaus die Absperrarmaturen der verschiedenen Drucksysteme mehr oder weniger gleichzeitig geöffnet werden und der zweite Dampferzeuger somit mit dem ersten und mit der Dampfturbine bereits in Betrieb befindlichen Dampferzeuger gekoppelt werden. Auch in diesem Fall muss die Dampferzeuger-Leistung (bei Gas- und Dampfturbinenanlagen damit auch die Leistung der Gasturbine) konstant gehalten werden, d.h. ein weiteres Hochfahren des Dampferzeugers wird gestoppt. Diese Methode ist zwar schneller, birgt aber das zusätzliche Risiko, dass sich Störungen in mehreren Systemen gleichzeitig entwickeln können und sich möglicherweise gegenseitig beeinflussen. Eine ungewollte Abschaltung der Dampfturbine oder des Dampferzeugers wegen Ansprechen von Grenzwerten (Trommelniveau hoch oder tief, zu wenig oder zu viel Dampf in Richtung Dampfturbine) wird dadurch wesentlich wahrscheinlicher.

Aufgabe der Erfindung ist es daher, das Verfahren zum Zuschalten eines weiteren Dampferzeugers weiter zu entwickeln, so dass eine signifikante Verkürzung des Zuschaltens erreicht wird. Die bisherigen Verzögerungen bei der Zuschaltung eines zweiten oder dritten Dampferzeugers durch Anhalten der Dampferzeuger-Leistung bzw. durch die Kopplung der Dampfsysteme selbst sollten möglichst gering gehalten bzw. ganz beseitigt werden.

Erfindungsgemäß wird diese Aufgabe gelöst durch das Verfahren gemäß Anspruch 1. Vorteilhafte Weiterbildungen der Erfindung sind in den abhängigen Ansprüchen definiert. Indem beim Zuschalten zumindest eines weiteren Dampferzeugers zu einem ersten Dampferzeuger in einer Kraftwerksanlage, die wenigstens zwei Dampferzeuger und eine Dampfturbine umfasst, bei dem ein zum Antrieb der Dampfturbine verwendetes Fluid in einem eine Anzahl von Dampfsystemen umfassenden Fluidkreislauf geführt wird, wobei die Dampfsysteme einzelnen Dampferzeugern zugeordnet sind und mit Absperrarmaturen gegeneinander separierbar sind und bei dem das Fluid mindestens des ersten Dampferzeugers auf die Dampfturbine geschaltet ist, bevor der Dampf des zumindest einen weiteren Dampferzeugers annähernd gleiche Dampfparameter wie der Dampf des ersten Dampferzeugers erreicht hat, die Absperrarmatur mindestens eines ersten Dampfsystems des zumindest einen weiteren Dampferzeugers geöffnet wird, so dass Dampf in den weiteren Dampferzeuger strömen kann, kann die Kopplung der Dampfsysteme bereits während des Hochfahrens des zweiten Dampferzeugers ohne Anhalten der Laststeigerung durchgeführt werden. Dadurch geht keine Zeit für das Koppeln verloren und die Umleitstationen können möglichst schnell geschlossen werden.

Vorteilhafter Weise wird die Absperrarmatur des mindestens einen ersten Dampfsystems in einer kalten Zwischenüberhitzungsleitung geöffnet. Das teilweise Öffnen der Armatur in der kalten Zwischenüberhitzung führt dazu, dass aus dem in Betrieb befindlichem System, umfassend die Dampfturbine und den ersten Dampferzeuger, Dampf in das Zwischenüberhitzungs-System des weiteren Dampferzeugers strömt und dieses praktisch auf den gleichen Druck auffüllt.

Zweckmäßiger Weise werden Temperatur und Druck des Fluids in mindestens einem zweiten Dampfsystem des zumindest einen weiteren Dampferzeugers weiter erhöht und der Dampf vom zweiten Dampfsystem in das erste Dampfsystem des weiteren Dampferzeugers umgeleitet, so dass Dampf vom weiteren Dampferzeuger über die geöffnete Absperrarmatur in den ersten Dampferzeuger strömt. Durch die teilgeöffnete kalte Zwischenüberhitzungs-Absperrarmatur wird sichergestellt, dass Dampf aus dem Hochdruck-Dampfsystem des weiteren Dampferzeugers, der beim Hochfahren dieses weiteren Dampferzeugers noch nicht die Parameter aufweist, um auf den Hochdruckteil der Dampfturbine geschaltet werden zu können und daher über die Hochdruck-Umleitstation in die kalte Zwischenüberhitzungs-Leitung einströmt und von der Mitteldruck-Umleitstation evtl. nicht abgeführt werden kann, durch Rückströmung in das in Betrieb befindliche kalte Zwischenüberhitzungs-System des ersten Dampferzeugers geleitet wird, und über dessen Zwischenüberhitzung zur Dampfturbine strömt und somit bereits zu einer Dampfturbinen-Leistungssteigerung führt.

Vorteilhafter Weise wird zumindest bei einem weiteren der Dampfsysteme des weiteren Dampferzeugers dessen Absperrarmatur geöffnet, insbesondere in der Hochdruck- bzw. Frischdampf- und in der Niederdruckleitung. Dies ist möglich, da beim Hochdruck- und Niederdruck-System üblicherweise Rückschlagarmaturen vorhanden sind, die eine Rückströmung aus dem in Betrieb befindlichen System verhindern. Durch die Leistungssteigerung des zweiten Dampferzeugers (bzw. der Gasturbine bei Gas- und Dampfturbinenanlagen) steigen Dampftemperaturen und Druck weiter an. Durch eine modifizierte Druckregelung (z.B. Umstellung auf durchflussgeführte Hochdruck-Umleitventilregelung) wird erreicht, dass die Annäherung des Druckes an den in Betrieb befindlichen ersten Dampferzeuger moderat geschieht. Bei Druckgleichheit öffnen die Rückschlagarmaturen des Hochdruck- und Niederdruck-Dampfsystem des weiteren Dampferzeugers und die Dampfströmung in Richtung Dampfturbine wird eingeleitet. Falls in diesen Dampfleitungen keine Rückschlagarmaturen vorhanden sind, kann der gleiche Effekt durch ein Öffnen der jeweiligen Absperrarmaturen bei gemessener Druckgleichheit erreicht werden.

Damit die Temperaturmessungen das Ansteigen der Dampftemperaturen im weiteren Dampferzeuger erfassen bzw. die Einspritzkühler ordnungsgemäß arbeiten können, ist es vorteilhaft, wenn eine geringe Strömung im Zwischenüberhitzungs-System des weiteren Dampferzeugers erzeugt wird, z.B. durch geringfügiges Öffnen eines Ventils in einer Mitteldruckumleitung oder einer Anwärmleitung, die in eine heiße Zwischenüberhitzungsleitung mündet.

Zweckmäßiger Weise werden Umleitventile geschlossen, nachdem entsprechende Absperrarmaturen geöffnet worden sind, so dass der produzierte Dampf von der Dampfturbine übernommen und nicht mehr in den Kondensator geleitet wird.

Vorteilhafter Weise wird eine Absperrarmatur in einer heißen Zwischenüberhitzungsleitung geöffnet, sobald die Dampftemperatur des weiteren Dampferzeugers im Wesentlichen gleich der Dampftemperatur des ersten Dampferzeugers ist. Die kalte Zwischenüberhitzungs-Armatur regelt dann eine Dampfmenge, die in etwa der produzierten Hochdruck-Dampfmenge entspricht, um möglichst eine Schieflast in den beiden Dampferzeugern zu vermeiden.

Es ist zweckmäßig, wenn die Absperrarmatur in der kalten Zwischenüberhitzung bei Steigerung des Durchflusses im Hochdruckdampfsystem des weiteren Dampferzeugers entsprechend weiter geöffnet wird.

In einer Gas- und Dampfturbinenanlage kann es auch zweckmäßig sein, wenn die Absperrarmatur beim Synchronisieren einer dem weiteren Dampferzeuger zugeordneten Gasturbine geöffnet wird.

Vorteilhafter Weise wird das Verfahren in einer Gas- und Dampfturbinenanlage oder einem Mehrblock-Dampfkraftwerk verwendet.

Erfindungsgemäß wird die Zuschaltung nicht wie bisher bei möglichst stationären Dampfzuständen durchgeführt, sondern während eines kontinuierlich ansteigenden Druckes und veränderbaren Leistungen und Dampfmengen.

Das Zwischenüberhitzungs-System des weiteren Dampferzeugers wird durch das bereits laufende Zwischenüberhitzungs-System des ersten Dampferzeugers auf Druck gebracht und mit geringer Menge durchströmt, obwohl die Hochdruck-Dampfproduktion des weiteren Dampferzeugers evtl. noch gar nicht begonnen hat. Wenn diese dann beginnt, ist die Fahrweise von Hochdruck-Dampfsystem und Zwischenüberhitzungs-System durch die gezielt zugelassene Rückströmung in der kalten Zwischenüberhitzungs-Leitung relativ unabhängig machbar. Dadurch wird die Komplexität der Regelungen verringert und eine Schritt-für-Schritt-Zuschaltung der Dampfsysteme nacheinander ist nicht zwingend erforderlich und damit zeitlich entkoppelt.

Dadurch ergeben sich wesentliche Vorteile beim Anfahren von 2x1 oder mehr-x1 Anlagenkonfigurationen bzw. beim Zuschalten des zweiten oder dritten Dampferzeugers (bzw. Gasturbinen-Abhitzedampferzeuger-Einheit bei Gas- und Dampfturbinenanlagen) wie z.B. generell eine kürzere Zuschaltzeit für den zweiten oder dritten Dampferzeuger, was die Wirtschaftlichkeit und den mittleren Anlagenwirkungsgrad des Kraftwerkes steigert. Ferner verkürzt sich natürlich auch die Anfahrzeit einer Kraftwerksanlage, wenn die Dampferzeuger aus bestimmten Gründen versetzt angefahren werden sollen. Dies führt insbesondere bei häufigen Starts (sog. Mittellastanlagen oder Spitzenlastanlagen) über die Betriebszeit gesehen zu höherem mittleren Anlagenwirkungsgrad und damit auch zu weniger Emissionen (Umweltfreundlichkeit). Damit werden diese Anlagen wirtschaftlicher und auch öfter vom Lastverteiler für den Netzbetrieb angefordert.

Die Erfindung wird beispielhaft anhand der Zeichnungen näher erläutert. Es zeigen schematisch und nicht maßstäblich:
- Figur 1: einen vereinfachten Wasser-Dampf-Kreislauf einer 2x1-Gas-und-Dampfturbinenanlage,
- Figur 2: einen zeitlichen Verlauf für das Zuschalten eines Dampferzeugers nach dem Stand der Technik und
- Figur 3: einen zeitlichen Verlauf für das Zuschalten eines Dampferzeugers nach der Erfindung.

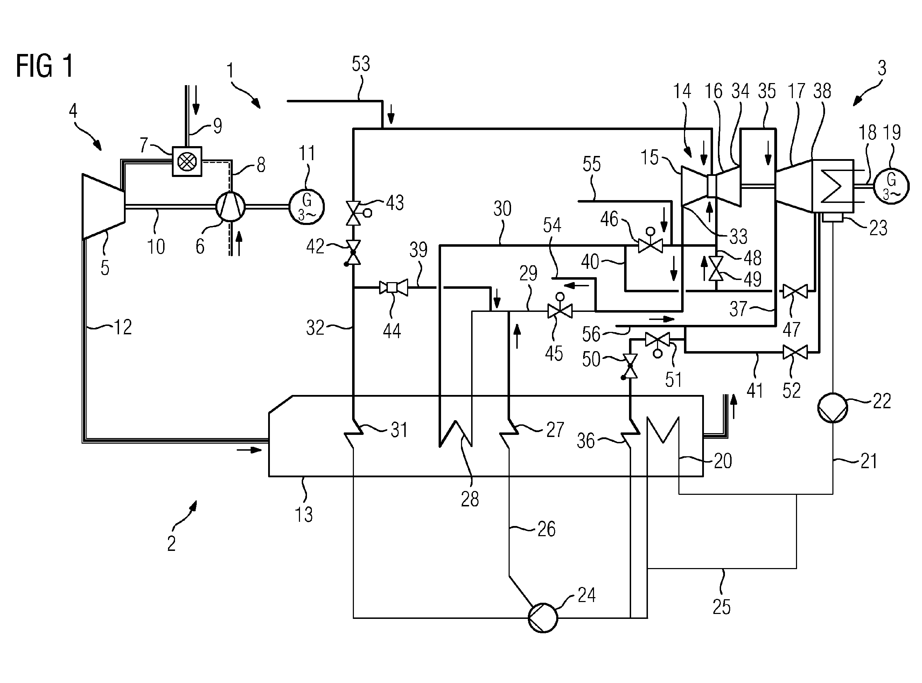

Die Figur 1 zeigt schematisch und beispielhaft eine Gas- und Dampfturbinenanlage 1, die zwei Gasturbinen/Abhitzedampferzeuger-Einheiten 2 und eine Dampfturbinenanlage 3 umfasst, wobei die beiden Gasturbinen/Abhitzedampferzeuger-Einheiten 2 prinzipiell gleich sein können. Von der ersten Gasturbinen/Abhitzedampferzeuger-Einheit 2 sind nur die Anschlüsse von und zur Dampfturbinenanlage 3 gezeigt. Alternativ zur gezeigten Gas- und Dampfturbinenanlage 1 ist das erfinderische Verfahren aber auch in einem Mehrblock-Dampfkraftwerk anwendbar, bei dem die Gasturbinen/Abhitzedampferzeuger-Einheiten 2 durch befeuerte Dampferzeuger-Einheiten zu ersetzen wären.

Die Gasturbinenanlage 4 ist mit einer Gasturbine 5, einem Verdichter 6 sowie wenigstens einer zwischen den Verdichter 6 und die Gasturbine 5 geschalteten Brennkammer 7 ausgestattet. Mittels des Verdichters 6 wird Frischluft angesaugt, verdichtet und über die Frischluftleitung 8 einem oder mehreren Brennern der Brennkammer 7 zugeführt. Die zugeführte Luft wird mit über eine Brennstoffleitung 9 zugeführtem flüssigem oder gasförmigem Brennstoff gemischt und das Gemisch entzündet. Die dabei entstehenden Verbrennungsabgase bilden das Arbeitsmedium der Gasturbinenanlage 4, welches der Gasturbine 5 zugeführt wird, wo es unter Entspannung Arbeit leistet und eine mit der Gasturbine 5 gekoppelte Welle 10 antreibt. Die Welle 10 ist außer mit der Gasturbine 5 auch mit dem Luftverdichter 6 sowie einem Generator 11 gekoppelt, um diese anzutreiben. Das entspannte Arbeitsmedium wird über eine Abgasleitung 12 an einen Abhitzedampferzeuger 13, der insbesondere als Zwangsdurchlaufssystem ausgebildet sein kann, abgeführt und verlässt den Abhitzedampferzeuger 13 ausgangsseitig in Richtung auf einen nicht dargestellten Kamin.

Die Dampfturbine 14 der Dampfturbinenanlage 3 weist eine erste Druckstufe 15 oder einen Hochdruckteil und eine zweite Druckstufe 16 oder einen Mitteldruckteil sowie eine dritte Druckstufe 17 oder einen Niederdruckteil auf, die über eine gemeinsame Welle 18 den Generator 19 antreiben.

Der Abhitzedampferzeuger 13 umfasst als Heizflächen einen Kondensatvorwärmer 20, der eingangsseitig über eine Kondensatleitung 21, in die eine Kondensatpumpe 22 geschaltet ist, mit Kondensat aus dem Kondensator 23 gespeist wird. Der Kondensatvorwärmer 20 ist ausgangsseitig an die Saugseite einer Speisewasserpumpe 24 geführt. Zur bedarfsweisen Umführung des Kondensatvorwärmers 20 ist dieser mit einer Bypassleitung 25 überbrückt.

Die Speisewasserpumpe 24 ist im Ausführungsbeispiel als Hochdruckspeisepumpe mit Mitteldruckentnahme 26 ausgebildet. Sie bringt das Kondensat auf ein für eine dem Hochdruckteil 15 der Dampfturbine 14 zugeordnete Hochdruckstufe des Strömungsmittelkreislaufs geeignetes Druckniveau. Das über die Speisewasserpumpe 24 geführte Kondensat wird mit mittlerem Druck einem Mitteldruck-Dampfsystem 27, umfassend einen Speisewasservorwärmer, einen Mitteldruckverdampfer und einen Überhitzer, zugeführt, das ausgangsseitig an eine den Hochdruckteil 15 ausgangsseitig mit einem Zwischenüberhitzer 28 verbindende kalte Zwischenüberhitzungsleitung 29 angeschlossen ist. Der Zwischenüberhitzer 28 wiederum ist ausgangsseitig über eine Dampfleitung 30 an den Mitteldruckteil 16 der Dampfturbine 14 angeschlossen.

Hochdruckseitig ist die Speisewasserpumpe 24 mit einem Hochdruckdampfsystem 31, umfassend einen Hochdruck-Economizer, einen Hochdruck-Verdampfer und einen Hochdruck-Überhitzer, verbunden, das ausgangsseitig mit dem Hochdruckteil 15 der Dampfturbine 14 über eine Frischdampfleitung 32 verbunden ist.

Im Hochdruckteil der Dampfturbine treibt der vom Überhitzer 28 überhitzte Dampf die Turbine 14 an, bevor er über den Dampfausgang 33 des Hochdruckteils 15 der Dampfturbine 14 und die kalte Zwischenüberhitzungsleitung 29 an einen Zwischenüberhitzer 28 weitergegeben wird.

Nach der Überhitzung im Zwischenüberhitzer 28 wird der Dampf über die Dampfleitung 30 an den Mitteldruckteil 16 der Dampfturbine 14 weitergeleitet, wo er die Turbine antreibt.

Der Dampfausgang 34 des Mitteldruckteils 16 der Dampfturbine 14 ist über eine Überströmleitung 35 mit dem Niederdruckteil 17 der Dampfturbine 14 verbunden.

Ebenfalls mit dem Niederdruckteil 17 der Dampfturbine 14 verbunden ist ein aus der Kondensatleitung 21 bespeistes Niederdruckdampfsystem 36, umfassend einen im Abhitzedampferzeuger 13 angeordneten Niederdruckdampferzeuger und einen Niederdrucküberhitzer, der über die Niederdruckdampfleitung 37 dem Niederdruckteil 17 der Dampfturbine 14 Dampf zuführt.

Nach dem Durchströmen des Niederdruckteils 17 und dem damit verbundenen Antreiben der Turbine 14 wird der abgekühlte und entspannte Dampf über den Dampfausgang 38 des Niederdruckteils 17 der Dampfturbine 14 an den Kondensator 23 ausgeben.

Neben den bereits genannten Elementen des Wasser-Dampf-Kreislaufes umfasst dieser außerdem eine Bypassleitung, die sog. Hochdruckumleitung 39, die von der Frischdampfleitung 32 abzweigt, bevor diese den Hochdruckteil 15 der Dampfturbine 14 erreicht. Die Hochdruckumleitung 39 umgeht den Hochdruckteil 15 und mündet in die kalte Zwischenüberhitzungsleitung 29 zwischen Hochdruckteil 15 und Zwischenüberhitzer 28.

Eine weitere Bypassleitung, die sog. Mitteldruckumleitung 40, zweigt von der Dampfleitung 30 ab, bevor diese in den Mitteldruckteil 16 der Dampfturbine 14 mündet. Die Mitteldruckumleitung 40 umgeht sowohl den Mitteldruckteil 16, als auch den Niederdruckteil 17 der Dampfturbine 14 und mündet in den Kondensator 23.

Ferner weist auch das Niederdruckdampfsystem 36 eine Niederdruckumleitung 41 auf, welche den Niederdruckteil 17 der Dampfturbine 14 umgeht und Niederdruckdampf direkt dem Kondensator 23 zuführt.

In die Frischdampfleitung 32 sind Absperrarmaturen, wie z.B. ein Rückschlagventil 42 und ein Schieber 43 eingebaut, mit welchen sie sich absperren lässt. In der Hochdruckumleitung 39 befindet sich eine weitere Absperrarmatur 44. Ebenso befindet sich eine Absperrarmatur 45 in der kalten Zwischenüberhitzungsleitung 29, sowie eine weitere Absperrarmatur 46 in der heißen Zwischenüberhitzungsleitung 30.

Auch in der Mitteldruckumleitung 40 ist ein Ventil 47 angeordnet.

Eine die Mitteldruckumleitung 40 mit der heißen Zwischenüberhitzerleitung 30 verbindende Anwärmleitung 48 weist ebenfalls ein Ventil 49 auf.

In der Niederdruckdampfleitung 37 sind ebenfalls zwei Absperrarmaturen und zwar ein Rückschlagventil 50 und ein Schieber 51 eingebaut, mit welchen sie sich absperren lässt. Ebenso befindet sich ein Absperrventil 52 in der Niederdruckumleitung 41 zum Kondensator 23.

Die Bypassleitungen 39, 40, 41 und die Absperrventile 42, 43, 44, 46, 47, 49, 50, 51, 52 dienen dazu, während des Anfahrens der Gas- und Dampfturbinenanlage 1 einen Teil des Dampfes zur Umgehung der Dampfturbine 14 umzuleiten.

Die Anschlüsse 53-56 zur ersten Dampferzeuger-Einheit sind in der Frischdampfleitung 32, der kalten Zwischenüberhitzungsleitung 29, der heißen Zwischenüberhitzungsleitung 30 und in der Niederdruckdampfleitung 37.

Nachfolgend wird ein Ausführungsbeispiel für das erfindungsgemäße Verfahren zum Zuschalten eines weiteren Dampferzeugers anhand der Figur 1 beschrieben.

Zu Beginn des Verfahrens nach der Erfindung wird die Dampfturbinenanlage 3 bereits von einem ersten Dampferzeuger bzw. einer ersten Gasturbinen-Abhitzedampferzeuger-Einheit mit Dampf versorgt. Zum Zuschalten einer weiteren Gasturbinen-Abhitzedampferzeuger-Einheit 2 wird die Gasturbinenanlage 4 gestartet und das aus ihr austretende Arbeitsmedium dem Abhitzedampferzeuger 13 zugeführt. Das entspannte Arbeitsmedium durchströmt den Abhitzedampferzeuger 13 und verlässt diesen über einen Ausgang in Richtung auf einen in Figur 1 nicht dargestellten Kamin. Beim Durchströmen des Abhitzedampferzeugers 13 wird Wärme vom Arbeitsmedium an das Wasser beziehungsweise den Dampf im Wasser-Dampf-Kreislauf übertragen.

Nach dem Starten der Gasturbinenanlage 4 führt die Abhitze des Arbeitsmediums im Abhitzedampferzeuger 13 zum Beginn der Dampfproduktion im Dampfsystem.

Zur Kopplung der Dampfsysteme während des Hochfahrens des zweiten Dampferzeugers 13 ohne Anhalten der Laststeigerung werden die Schieber 43, 45 und 51 im Hochdruckdampfsystem 31, in der kalten Zwischenüberhitzungsleitung 29 des Mitteldruckdampfsystems 27 und im Niederdruckdampfsystem 36 schon relativ früh, z.B. beim Synchronisieren der weiteren Gasturbinenanlage 4 bzw. beim Drucksteigern des weiteren Abhitzedampferzeugers 13 geöffnet. Dies ist möglich, da beim Hochdrucksystem 31 und beim Niederdrucksystem 36 üblicherweise Rückschlagarmaturen 42 und 50 vorhanden sind, die eine Rückströmung aus dem in Betrieb befindlichen System verhindern.

Das teilweise Öffnen der Absperrarmatur 45 in der kalten Zwischenüberhitzungsleitung 29 führt dazu, dass aus dem in Betrieb befindlichem System Dampf in den weiteren Zwischenüberhitzer 28 strömt und diesen praktisch auf den gleichen Druck auffüllt. Außerdem wird durch Erzeugen einer geringen Strömung im weiteren Zwischenüberhitzungssystem, z.B. durch geringfügiges Öffnen des Ventils 47 in der Mitteldruckumleitung 40 oder des Ventils 49 in der Anwärmleitung 48, dafür gesorgt, dass Temperaturmessungen das Ansteigen der Dampftemperaturen erfassen bzw. Einspritzkühler ordnungsgemäß arbeiten können.

Weiterhin wird durch die teilgeöffnete Absperrarmatur 45 in der kalten Zwischenüberhitzungsleitung 29 sichergestellt, dass Hochdruckdampf, der über die Hochdruckumleitung 39 in die kalte Zwischenüberhitzungsleitung 29 einströmt und von der Mitteldruckumleitung 40 evtl. nicht abgeführt werden kann, durch Rückströmung in das in Betrieb befindliche kalte Zwischenüberhitzungssystem des ersten Dampferzeugers geleitet wird, und über dessen Zwischenüberhitzung zur Dampfturbine 14 strömt und somit bereits zu Dampfturbinen-Leistungssteigerung führt.

Durch die Leistungssteigerung des zweiten Dampferzeuger 13 (bzw. der Gasturbinenanlage bei Gas- und Dampfturbinenanlagen) steigen Dampftemperaturen und Druck weiter an. Durch eine modifizierte Druckregelung (z.B. Umstellung auf durchflussgeführte Hochdruck-Umleitventilregelung) wird erreicht, dass die Annäherung des Druckes an das in Betrieb befindliche erste Dampferzeuger-Dampfsystem moderat geschieht. Bei Druckgleichheit öffnen die Rückschlagarmaturen 42 und 50 des Hochdruck- 31 und des Niederdruck-Dampfsystems 36 des weiteren Dampferzeugers 13 und die Dampfströmung in Richtung Dampfturbine 14 wird eingeleitet. Falls in diesen Dampfleitungen 32 und 37 keine Rückschlagarmaturen 42 bzw. 50 vorhanden sind, kann der gleiche Effekt durch ein Öffnen der jeweiligen Absperrarmaturen bei gemessener Druckgleichheit erreicht werden.

Durch das zunehmende Schließen der Umleitventile 44, 47, 52 wird schließlich der produzierte Dampferzeuger-Dampf von der Dampfturbine 14 übernommen.

Die Absperrarmatur 46 in der heißen Zwischenüberhitzungsleitung 30 wird geöffnet sobald die Dampftemperatur des weiteren Dampferzeugers 13 annähernd gleich mit dem in Betrieb befindlichen ersten Dampferzeuger ist. Die kalte Zwischenüberhitzungsarmatur 45 regelt dann eine Dampfmenge, die in etwa der produzierten Hochdruck-Dampfmenge entspricht, um möglichst eine Schieflast in den beiden Dampferzeugern zu vermeiden.

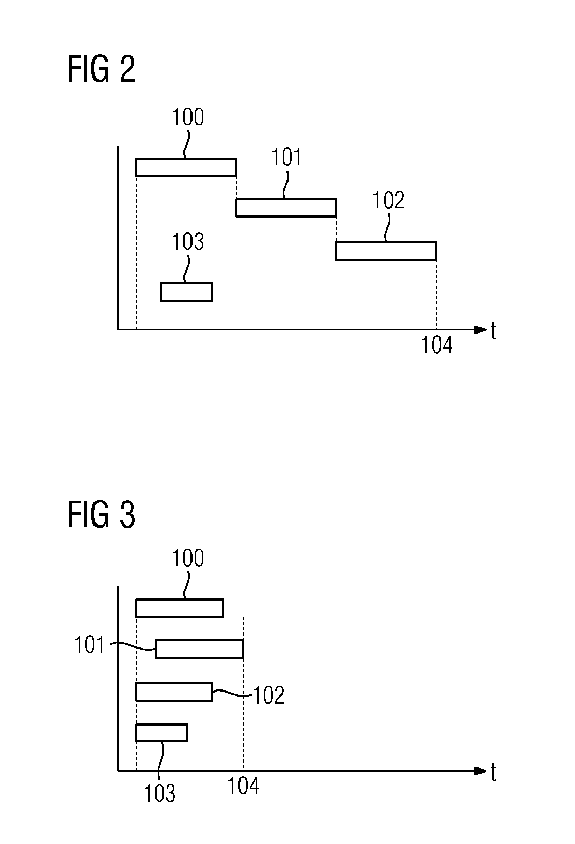

Figur 2 zeigt schematisch den zeitlichen Verlauf für das Zuschalten eines weiteren Dampferzeugers 13 nach dem Stand der Technik. Wie bereits ausgeführt, werden nach dem Stand der Technik die Dampfsysteme nach einer bestimmten Reihenfolge auf annähernd gleichen Druck und gleiche Temperatur gebracht und in einer bestimmten Reihenfolge gekoppelt. Üblicherweise beginnt der Prozess mit der kalten Zwischenüberhitzung 100. Ist diese vollständig zugeschaltet, folgt die heiße Zwischenüberhitzung 101 und nach deren vollständigem Zuschalten das Hochdrucksystem 102. Das Niederdrucksystem kann bereits kurz nach Beginn des Zuschaltens der kalten Zwischenüberhitzung ebenfalls zugeschaltet werden. Bis alle Bypass-Ventile geschlossen sind, vergehen auf diese Weise etwa 15 bis 20 Minuten.

Im Gegensatz hierzu werden, wie in Figur 3 gezeigt, beim Verfahren nach der Erfindung die einzelnen Systeme frühzeitig und größtenteils nahezu gleichzeitig zugeschaltet, so dass es praktisch keine Verzögerung für das Hochfahren der Gasturbine beim Zufahren des zweiten Gasturbinen-/Abhitzedampferzeuger-Systems gibt. Das Schließen der Bypassventile hängt davon ab, wie schnell die Dampfturbine den Dampf des zweiten Abhitzedampferzeugers übernehmen kann.

## Patentansprüche

1. Verfahren zum Zuschalten zumindest eines weiteren Dampferzeugers (13) zu einem ersten Dampferzeuger in einer Kraftwerksanlage , die wenigstens zwei Dampferzeuger (13) und eine Dampfturbine (14) umfasst, bei dem ein zum Antrieb der Dampfturbine (14) verwendetes Fluid in einem eine Anzahl von Dampfsystemen (27,31,36) umfassenden Fluidkreislauf geführt wird, wobei die Dampfsysteme (27,31,36) einzelnen Dampferzeugern (13) zugeordnet sind und mit Absperrarmaturen (42,43,44,45,46,47,50,51,52) gegeneinander separierbar sind und bei dem das Fluid mindestens des ersten Dampferzeugers auf die Dampfturbine (14) geschaltet ist, **dadurch gekennzeichnet, dass**, bevor der Dampf des zumindest einen weiteren Dampferzeugers (13) annähernd gleiche Dampfparameter wie der Dampf des ersten Dampferzeugers erreicht hat, die Absperrarmatur (45) mindestens eines ersten Dampfsystems des zumindest einen weiteren Dampferzeugers (13) geöffnet wird, so dass Dampf in den weiteren Dampferzeuger strömen kann.

2. Verfahren nach Anspruch 1, wobei die Absperrarmatur (45) des mindestens einen ersten Dampfsystems (27) in einer kalten Zwischenüberhitzungsleitung (29) geöffnet wird.

3. Verfahren nach Anspruch 1 oder 2, wobei Temperatur und Druck des Fluids in mindestens einem zweiten Dampfsystem (31) des zumindest einen weiteren Dampferzeugers (13) weiter erhöht werden und der Dampf vom zweiten Dampfsystem (31) in das erste Dampfsystem (27) umgeleitet wird, so dass Dampf vom weiteren Dampferzeuger (13) über die geöffnete Absperrarmatur (45) in den ersten Dampferzeuger strömt.

4. Verfahren nach einem der vorhergehenden Ansprüche, wobei zumindest bei einem weiteren der Dampfsysteme (31, 36) des weiteren Dampferzeugers (13) dessen Absperrarmatur (43,51) geöffnet wird.

5. Verfahren nach Anspruch 4, wobei die Absperrarmatur (43) des weiteren der Dampfsysteme (31) des weiteren Dampferzeugers (13) in einer Frischdampfleitung (32) geöffnet wird.

6. Verfahren nach Anspruch 4, wobei die Absperrarmatur (51) des weiteren der Dampfsysteme (36) des weiteren Dampferzeugers (13) in einer Niederdruckleitung (37) geöffnet wird.

7. Verfahren nach einem der vorhergehenden Ansprüche, wobei ein Ventil (47) in einer Mitteldruckumleitung (40) im weiteren Dampferzeuger (13) geöffnet wird.

8. Verfahren nach einem der vorhergehenden Ansprüche, wobei eine in eine heiße Zwischenüberhitzungsleitung (30) mündende Anwärmleitung (48) des weiteren Dampferzeugers (13) geöffnet wird.

9. Verfahren nach einem der vorhergehenden Ansprüche, wobei Umleitventile (44,47,52) geschlossen werden, nachdem entsprechende Absperrarmaturen geöffnet worden sind.

10. Verfahren nach einem der vorhergehenden Ansprüche, wobei eine Absperrarmatur (46) in einer heißen Zwischenüberhitzungsleitung (30) geöffnet wird, sobald die Dampftemperatur des weiteren Dampferzeugers (13) im Wesentlichen gleich der Dampftemperatur des ersten Dampferzeugers ist.

11. Verfahren nach einem der Ansprüche 1 bis 3, wobei die Absperrarmatur (45) bei Steigerung des Durchflusses im Hochdruckdampfsystem (31) des weiteren Dampferzeugers (13) geöffnet wird.

12. Verfahren nach einem der Ansprüche 1 bis 3, wobei die Absperrarmatur (45) beim Synchronisieren einer dem weiteren Dampferzeuger (13) zugeordneten Gasturbine (4) geöffnet wird.

13. Verwendung des Verfahrens nach einem der vorhergehenden Ansprüche in einer Gas- und Dampfturbinen-Anlage (1).

14. Verwendung des Verfahrens nach einem der Ansprüche 1 bis 11 in einem Mehrblock-Dampfkraftwerk.
